**Europäisches Patentamt**

**European Patent Office**

**Office européen des brevets**

(19)

(11) Veröffentlichungsnummer : **0 128 435**
**B1**

(12)

# EUROPÄISCHE PATENTSCHRIFT

(45) Veröffentlichungstag der Patentschrift :
26.04.89

(51) Int. Cl.⁴ : **F 02 F   1/24**, F 02 F   1/38

(21) Anmeldenummer : **84106013.0**

(22) Anmeldetag : **26.05.84**

(54) Zylinderkopf für eine Verbrennungskraftmaschine.

(30) Priorität : **10.06.83 US 503390**

(43) Veröffentlichungstag der Anmeldung :
**19.12.84 Patentblatt 84/51**

(45) Bekanntmachung des Hinweises auf die Patenterteilung : **26.04.89 Patentblatt 89/17**

(84) Benannte Vertragsstaaten :
**AT BE CH DE FR GB IT LI SE**

(56) Entgegenhaltungen :
**DE—A— 2 102 071**
**DE—A— 2 236 028**
**FR—A— 2 366 460**
**GB—A—   809 053**
**US—A— 2 777 431**
**SOVIET INVENTIONS ILLUSTRATED, Sektion Mechanik, Woche K08, 06. April 1983, Zusammenfassungsnr.
C6571 Q52, Derwent Publications Ltd., London, GB; &
SU - A - 918 476 (SARAT AGRIC MECH IN) 17.04.1982**

(73) Patentinhaber : **DEERE & COMPANY**
**1 John Deere Road**
**Moline Illinois 61265 (US)**

(72) Erfinder : **Hewitt, Robert William**
**201 Hill Ct.**
**Cedar Falls Iowa 50613 (US)**
Erfinder : **Ruff, James Howard**
**203 Parkgate Road**
**Cedar Falls Iowa 50613 (US)**
Erfinder : **Haight, Aubrey E.**
**203 Jefferson St.**
**Hudson Iowa 50643 (US)**

(74) Vertreter : **Gramm, Werner, Dipl.-Ing. et al
Patentanwälte Gramm + Lins Theodor-Heuss-
Strasse 2**
**D-3300 Braunschweig (DE)**

EP 0 128 435 B1

Jouve, 18, rue St-Denis, 75001 Paris, France

## Beschreibung

Die Erfindung betrifft einen Zylinderkopf für eine Verbrennungskraftmaschine, mit

a) einer Bodenfläche, die das eine Ende eines Zylinders abschließt ;

b) zumindest einer Ansaugleitung und einem Auslaßkanal, die in nebeneinanderliegenden, in der Bodenfläche angeordneten Ansaug- und Auslaßöffnungen enden, die mit einer zwischen Bodenfläche und einem im Zylinder angeordneten Kolben gebildeten Verbrennungskammer in Verbindung stehen,

c) einer mit der Verbrennungskammer in Verbindung stehenden Einspritzbohrung für eine Einspritzdüse,

d) zwischen dem äußeren Umfang zweier benachbarter Öffnungen ist ein Stegbereich gebildet, in dem zumindest teilweise die Einspritzbohrung angeordnet ist, die zumindest einen Durchmesser aufweist, der kleiner ist als der Durchmesser der genannten Öffnungen ;

e) eine Buchse ist als tragendes Teil in zumindest einem Abschnitt der Einspritzbohrung angeordnet.

Einspritzdieselmaschinen weisen in ihrem Zylinderkopf eine Einspritzbohrung zum Einsatz einer Kraftstoffeinspritzdüse auf. Diese Einspritzbohrung liegt üblicherweise zwischen der Ansaugöffnung und der Auslaßöffnung, die im Zylinderkopf angeordnet sind. Dieser Bereich des Zylinderkopfes ist bei der Verbrennung der Gase in der Verbrennungskammer hohen Temperaturen ausgesetzt, die in Verbindung mit dem schmalen Materialsteg zwischen Einspritzbohrung und Ansaug- und Auslaßöffnung zu der Einleitung und Ausbreitung von Rissen führen, die sich aus den hohen Belastungen ergeben, denen das Material ausgesetzt ist. Frühere Versuche zur Reduzierung dieser Rißbildungen schlossen die Verwendung eines legierten Eisens mit hohem Widerstand gegen thermische Ermüdung sowie die Verwendung eines kleinen Radius oder einer Fase ein, die um die Einspritzbohrung herum angearbeitet wurde. Obwohl diese beiden Alternativen zu einem begrenzten Erfolg geführt haben, weisen sie jeweils auch einen Nachteil auf. Das legierte Eisen ist sehr teuer, und der Radius bzw. die Fase senkt den Belastungsausgangswert nicht weit genug ab, um den Anforderungen einiger Maschinenhersteller gerecht zu werden.

Die eingangs erläuterte Ausführungsform läßt sich der DE-A-2 236 028 entnehmen. Offenbart ist ein Zylinderkopf für eine wassergekühlte Einspritz-Brennkraftmaschine mit je zwei hängend angeordneten Einlaß- und Auslaßventilen, von denen jeweils ein Einlaß- und ein Auslaßventil bezüglich der Zylinderachse einander diametral gegenüberliegen. In eine zur Zylinderachse koaxiale, den Zylinderkopfboden und die obere Begrenzungswand des Zylinderkopfes durchsetzende Bohrung ist eine Düsenhalterhülse dicht eingesetzt, in der sich die Einspritzdüse befindet.

Vergleichbar erscheint auch noch die Veröffentlichung SOVIET INVENTIONS ILLUSTRATED, Sektion Mechanik, Woche K08, 06. April 1983, Zusammenfassungsnr. C6571 Q52, Derwent Publications Ltd., London, GB ; & SU-A-918 476 (SARAT AGRIC MECH IN) 17.04.82. Jedoch offenbart diese Vorveröffentlichung keine innerhalb der Einspritzbohrung als tragendes Teil angeordnete Buchse.

Der Erfindung liegt die Aufgabe zugrunde, bei dem einleitend beschriebenen Zylinderkopf die Einleitung und Ausbreitung thermischer Ermüdungsrisse innerhalb der Bodenfläche des Zylinderkopfes zu verringern.

Ausgehend von dem eingangs erläuterten Zylinderkopf wird diese Aufgabe gemäß der Erfindung durch folgende zusätzliche Merkmale gelöst :

f) Die Buchse ist in dem genannten Abschnitt der Einspritzbohrung mit Preßsitz angeordnet, um in diesem Stegbereich Belastungsspitzen zu verringern und den Beginn thermischer Ermüdungsrisse zu verzögern ;

g) das Material der Buchse weist einen größeren thermischen Ausdehnungskoeffizienten auf als das Material des Zylinderkopfes ;

h) das Material der Buchse ist steifer als das Material des Zylinderkopfes, um so der Tendenz des Zylinderkopfes entgegenzuwirken, unter Druck nachzugeben.

Dabei kann das erste Ende der Buchse etwa bündig mit der Bodenfläche abschließen, oder aber sich über die Bodenfläche hinaus und in die Verbrennungskammer hinein erstrecken.

Die Buchse verringert die auf den Zylinderkopf wirkende Druckbelastung und wirkt dadurch der Tendenz des Zylinderkopfes entgegen, unter Druck nachzugeben.

Ein weiterer Vorteil der erfindungsgemäßen Konstruktion liegt in den geringen Herstellungskosten. Die erfindungsgemäße Anordnung der Buchse führt dazu, daß die beim Betrieb des Motors auftretenden Belastungen auf den Umfang der Buchse konzentriert werden und dadurch die Belastung neu verteilen, die auf das Material wirkt, aus dem der Zylinderkopf hergestellt ist.

Die Buchse kann aus einem ersten und zweiten Abschnitt bestehen, die zwischen einem ersten und zweiten Ende der Buchse liegen, wobei die Querschnittsfläche des zweiten Abschnittes etwas größer ist als die des ersten Abschnittes und so zu einem größeren Passungsübermaß mit einem Abschnitt der Einspritzbohrung und dadurch zu einer leichteren Befestigung der Buchse in der Einspritzbohrung führt. Der zweite Abschnitt kann eine größere Umfangsfläche bzw. einen größeren Durchmesser aufweisen als der erste Buchsenabschnitt.

Weitere Merkmale der Erfindung sind Gegenstand der Unteransprüche und werden anhand von Ausführungsbeispielen näher erläutert.

In der Zeichnung sind zwei als Beispiele dienende Ausführungsformen der Erfindung dargestellt. Es zeigen :

Figur 1 einen teilweise geschnittenen Ausschnitt eines Zylinderkopfes ;

Figur 2 in perspektivischer Darstellung eine Buchse ;

Figur 3 in vergrößertem Maßstab und im Schnitt ein Detail der Buchse gemäß Figur 2 ;

Figur 4 ein Detail der Figur 1 in abgewandelter Ausführungsform ;

Figur 5 in schematischer Darstellung die Unteransicht eines Zylinderkopfes und

Figur 6 eine abgewandelte Ausführungsform in einer Darstellung gemäß Figur 5.

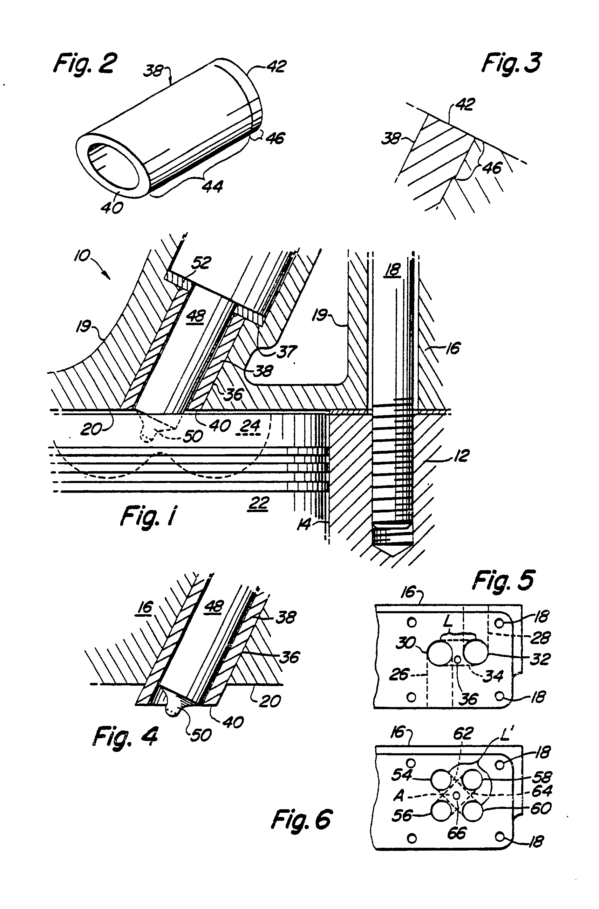

Figur 1 zeigt eine lastaufnehmende Anordnung 10 für eine Verbrennungskraftmaschine. Letztere besteht u. a. aus einem Motorblock 12 mit zumindest einem darin angeordneten Zylinder 14 und aus einem Zylinderkopf 16, der mit mehreren Bolzen 18 auf den Motorblock 12 geschraubt ist, zumindest eine Kühlkammer 19 umschließt und eine Bodenfläche 20 aufweist, die das eine Ende des Zylinders 14 abschließt. In dem Zylinder 14 ist ein hin- und hergehender Kolben 22 angeordnet, der zusammen mit der genannten Bodenfläche 20 eine Verbrennungskammer 24 bildet.

Innerhalb des Zylinderkopfes 16 sind eine Ansaugleitung 26 sowie ein Auslaßkanal 28 angeordnet, die in einer Ansaugöffnung 30 bzw. einer Auslaßöffnung 32 münden (siehe Figur 5) und mit der Verbrennungskammer 24 in Verbindung stehen. Zwischen dem Außenumfang der Ansaugöffnung 30 sowie der Auslaßöffnung 32 liegt ein Stegbereich 34, dessen größte Länge L kleiner ist als der doppelte Durchmesser der größeren der beiden Öffnungen 30, 32. Der Zylinderkopf 16 umfaßt ferner eine Einspritzbohrung 36, die mit der Verbrennungskammer 24 in Verbindung steht und zumindest teilweise innerhalb des Stegbereiches 34 liegt. Die Einspritzbohrung 36 hat einen kleineren Durchmesser als die beiden Ansaug- und Auslaßöffnungen 30, 32 und ist vorzugsweise abgetreppt ausgebildet (siehe Figur 1) mit zumindest einer Schulter 37.

Innerhalb der Einspritzbohrung 36 ist mit Preßsitz eine Buchse 38 angeordnet, die ein erstes Ende 40 und ein zweites Ende 42 aufweist, zwischen denen ein erster Buchsenabschnitt 44 und ein zweiter Buchsenabschnitt 46 liegen. Der erste Abschnitt 44 umfaßt etwa 70 bis 90 % der Gesamtlänge der Buchse 38, während sich der zweite Abschnitt 46 über die verbleibenden 10 bis 30 % erstreckt. Der zweite Abschnitt 46 weist einen geringfügig größeren Außendurchmesser auf als der erste Abschnitt 44 (siehe Figur 3). Die Buchse 38 ist im untersten Bereich der Einspritzbohrung 36 so angeordnet, daß ihr erstes Ende 40 entweder bündig mit der Bodenfläche 20 liegt, wie es Figur 1 zeigt, oder aber sich über die Bodenfläche 20 hinaus in die Verbrennungskammer 24 hinein erstreckt, wie es in Figur 4 dargestellt ist. Zwischen dem Außenumfang der Buchse 38 und dem kleinsten Innendurchmesser der Einspritzbohrung 36 ist ein Festsitz so ausgebildet, daß die Buchse 38 leicht verformt wird. Zusätzlich erzeugt der vergrößerte zweite Abschnitt 46 der Buchse 38 an deren zweiten Ende 42 einen festeren Paßsitz, um so zu verhindern, daß die Buchse 38 in die Verbrennungskammer 24 rutscht, wodurch das erste Ende 40 der Buchse 38 mit der Oberfläche des Kolbens 22 in Berührung kommen könnte, was zu einer Zerstörung der Maschine führen würde.

Die Buchse 38 besteht aus einem Material, das einen höheren Wärmeausdehnungskoeffizienten aufweist als das Material, aus dem der Zylinderkopf 16 hergestellt ist. Die Buchse 38 sollte außerdem eine größere Steifheit aufweisen als das Material, aus dem der Zylinderkopf besteht, so daß die Buchse 38 die auf den Zylinderkopf ausgeübte Druckbelastung verringern und dadurch der Tendenz des Zylinderkopfes, unter Druck nachzugeben, entgegenwirken kann.

In der Einspritzbohrung 38 ist eine sich durch die Buchse 38 hindurch erstreckende Kraftstoffeinspritzdüse 48 angeordnet, deren Düsenspitze 50 in die Verbrennungskammer 24 ragt. Ein Dichtring 52 kann am zweiten Ende 42 der Buchse 38 angeordnet sein, um ein Austreten der Verbrennungsgase aus der Verbrennungskammer 24 zu verhindern. Der Dichtring 52 dient als Abdichtung zwischen der Buchse 38 und der Einspritzdüse 48.

Figur 5 läßt erkennen, daß zwischen dem Außenumfang der Ansaugöffnung 30 sowie der Auslaßöffnung 32 und dem Außenumfang der Einspritzbohrung 36 nur wenig Material vorhanden ist. Diese beiden schmalen Materialstege sind sehr anfällig gegen Risse beim Betrieb des Motors. Laborversuche haben gezeigt, daß die Temperatur der Bodenfläche 20 des Zylinderkopfes 16 etwa 420 °C erreicht, wenn die Verbrennungstemperaturen der Maschine einen Wert von etwa 1 900 °C erreichen. Diese hohen Temperaturen führen unter Druckbelastung zu einem Nachgeben des Materials, aus dem der Zylinderkopf 16 hergestellt ist. Beim Abkühlen des Zylinderkopfes 16 entstehen Materialspannungen, wobei beginnend vom Außenumfang der Einspritzbohrung 36 Risse entstehen. Diese Risse ergeben sich aus einer niedrigen thermischen Belastungsfrequenz der Maschine und können sich nach außen in Richtung auf den Außenumfang der Ansaugöffnung 30 und der Auslaßöffnung 32, oder aber in Richtung auf die Kühlkammer 19 ausbreiten. Das Entstehen derartiger Risse kann dazu führen, daß Verbrennungsgase in die Kühlkammer 19 eindringen bzw. daß Kühlflüssigkeit in die Verbrennungskammer 24 läuft. Beide Erscheinungen stehen einer effektiven Arbeit der Maschine entgegen.

Der Einsatz der billigen Buchse 38 in den Zylinderkopf 18 hat nachweislich dazu geführt, die Bildung derartiger Belastungsrisse um 40 % zu reduzieren oder zu verzögern, wenn ein Zylinderkopf 16 aus Gußeisen Verwendung findet. Der Hauptteil der Belastung wird von dem ersten Abschnitt 44 der Buchse 38, insbesondere vom unteren Abschnitt neben der Bodenfläche 20 aufgenommen. Durch Verringerung der Belastung in diesem Bereich ist es möglich, das Entstehen von Rissen im Stegbereich 34 zu verhindern, schlimmstenfalls aber die Ausbreitung derartiger Risse zu verzögern.

Figur 6 zeigt einen Zylinderkopf 16 mit zwei Ansaugöffnungen 54, 56 und zwei benachbart angeordneten Auslaßöffnungen 58, 60. Eine derartige Anordnung wird normalerweise bei solchen Dieselmotoren verwendet, deren Leistung durch schnelles Füllen des Zylinders 14 bzw. schnelles Entleeren des Zylinders 14 erhöht werden soll. Bei dieser Anordnung liegen die Öffnungen 54 bis 60 in einem Quadrat, wobei der Außenumfang von jeweils einem sich diagonal gegenüberliegenden Paar Öffnungen zwischen sich einen Stegbereich 62 und 64 bildet. Bei dieser Anordnung weist jeder der Stegbereiche 62, 64 eine größte Länge L' auf, die kleiner ist als das Dreifache des Durchmessers der größeren von sich diagonal gegenüberliegenden Öffnungen 54 und 60 bzw. 56 und 58. Der Überlappungsbereich der beiden Stegbereiche 62, 64 bildet eine Fläche A, innerhalb derer eine Einspritzbohrung 66 zumindest teilweise angeordnet ist. Der Durchmesser der Einspritzbohrung 66 ist kleiner als der Durchmesser von irgendeiner der Öffnungen 54 bis 60. Die Buchse 38 wird, wie oben beschrieben wurde, mit Preßsitz in die Einspritzbohrung 66 eingesetzt und dient als Lastaufnahmeteil zur Verringerung der Entstehung von Wärmerissen im Überlappungsbereich A der beiden Stegbereich 62, 64.

**Patentansprüche**

1. Zylinderkopf (16) für eine Verbrennungskraftmaschine, mit
   a) einer Bodenfläche (20), die das eine Ende eines Zylinders (14) abschließt ;
   b) zumindest einer Ansaugleitung (26) und einem Auslaßkanal (28), die in nebeneinanderliegenden, in der Bodenfläche (20) angeordneten Ansaug- und Auslaßöffnungen (30, 32 ; 54, 56, 58, 60) enden, die mit einer zwischen Bodenfläche (20) und einem im Zylinder (14) angeordneten Kolben (22) gebildeten Verbrennungskammer (24) in Verbindung stehen,
   c) einer mit der Verbrennungskammer (24) in Verbindung stehenden Einspritzbohrung (36 ; 66) für eine Einspritzdüse (48, 50),
   d) zwischen dem äußeren Umfang zweier benachbarter Öffnungen (30, 32 ; 54, 60, 56, 58) ist ein Stegbereich (34 ; 62, 64) gebildet, in dem zumindest teilweise die Einspritzbohrung (36 ; 66) angeordnet ist, die zumindest einen Durchmesser aufweist, der kleiner ist als der Durchmesser der genannten Öffnungen (30, 32 ; 54, 60, 56, 58) ;
   e) eine Buchse (38) ist als tragendes Teil in zumindest einem Abschnitt der Einspritzbohrung (36 ; 66) angeordnet ;
gekennzeichnet durch folgende Merkmale :
   f) die Buchse (38) ist in dem genannten Abschnitt der Einspritzbohrung (36 ; 66) mit Preßsitz angeordnet, um in diesem Stegbereich (34 ; 62, 64) Belastungsspitzen zu verringern und den Beginn thermischer Ermüdungsrisse zu verzögern ;
   g) das Material der Buchse (38) weist einen größeren thermischen Ausdehnungskoeffizienten auf als das Material des Zylinderkopfes (16) ;
   h) das Material der Buchse (38) ist steifer als das Material des Zylinderkopfes (16), um so der Tendenz des Zylinderkopfes (16) entgegenzuwirken, unter Druck nachzugeben.

2. Zylinderkopf nach Anspruch 1, dadurch gekennzeichnet, daß das erste Ende (40) der Buchse (38) etwa bündig mit der Bodenfläche (20) abschließt.

3. Zylinderkopf nach Anspruch 1, dadurch gekennzeichnet, daß sich das erste Ende (40) der Buchse (38) über die Bodenfläche (20) hinaus und in die Verbrennungskammer (24) hinein erstreckt.

4. Zylinderkopf nach einem der vorhergehenden Ansprüche, dadurch gekennzeichnet, daß die äußere Mantelfläche der Buchse (38) sowie die Einspritzbohrung (36 ; 66) abgestuft sind.

5. Zylinderkopf nach Anspruch 4, dadurch gekennzeichnet, daß die Buchse (38) aus einem ersten und zweiten Abschnitt (44, 46) besteht, die zwischen einem ersten und zweiten Ende (40, 42) der Buchse (38) liegen, wobei die Querschnittsfläche des zweiten Abschnittes (46) etwas größer ist als die des ersten Abschnittes (44) und so zu einem größeren Passungsübermaß mit einem Abschnitt der Einspritzbohrung (36 ; 66) und dadurch zu einer leichteren Befestigung der Buchse (38) in der Einspritzbohrung (36 ; 66) führt.

6. Zylinderkopf nach Anspruch 5, dadurch gekennzeichnet, daß sich der erste Abschnitt (44) von dem genannten Ende (40) der Buchse (38) über etwa 70 bis 90 % der Gesamtlänge der Buchse (38) erstreckt.

7. Zylinderkopf nach einem der vorhergehenden Ansprüche, dadurch gekennzeichnet, daß bei Anordnung von nur zwei Öffnungen (30, 32) die größte Länge (L) des genannten Stegbereiches (34) kleiner ist als der doppelte Durchmesser der größeren Ansaug- oder Auslaßöffnung (30, 32).

8. Zylinderkopf nach einem der Ansprüche 1 bis 6, mit zwei Ansaugleitungen (26) und zwei Auslaßkanälen (28), die in vier in einem Viereck innerhalb der Bodenfläche (20) angeordneten Ansaug- und Auslaßöffnungen (54, 56, 58, 60) münden, dadurch gekennzeichnet, daß zwischen dem äußeren Umfang jeweils zweier sich diagonal gegenüberliegender Ansaug- und Auslaßöffnungen (54, 60 ; 56, 58) zwei sich überlappende Stegbereiche (62, 64) gebildet sind, deren größte Länge (L') jeweils kleiner ist als der dreifache Durchmesser der größeren diagonal angeordneten Ansaug- oder Auslaßöffnung (54, 56, 58, 60), wobei die Einspritzbohrung (66) zumindest teilweise im Überlappungsbereich der beiden Stegbereiche (62, 64) angeordnet ist.

**Claims**

1. Cylinder head (16) for an internal combustion engine, with

a) a bottom surface (20), which closes the one end of a cylinder (14) ;

b) at least one inlet duct (26) and an exhaust channel (28) which terminate in adjacent inlet and exhaust openings (30, 32 ; 54, 56, 58, 60) arranged in the bottom surface (20), and which are in communication with a combustion chamber (24) formed between the bottom surface (20) and a piston (22) arranged in the cylinder,

c) an injection bore (36 ; 66) for an injection nozzle (48 ; 50) in communication with the combustion chamber (24),

d) a web region (34 ; 62, 64) formed between two adjacent openings (30, 32 ; 54, 56, 58, 60), in which region the injection bore (36 ; 66) is at least partially arranged, which bore has a diameter which is smaller than the diameter of the said openings (30, 32 ; 54, 56, 58, 60) ;

e) a bush (38) is arranged as support part in at least one section of the injection bore (36 ; 66) ; characterized by the following features :

f) the bush (38) is a press fit in the said section of the injection bore (36 ; 66), in order to reduce peak loads in this web region (34 ; 62, 64) and delay the beginning of thermal fatigue cracks ;

g) the material of the bush (38) has a greater coefficient of thermal expansion than the material of the cylinder head (16) ;

h) the material of the bush (38) is stiffer than the material of the cylinder head (16), in order thus to counteract the tendency of the cylinder head to yield under pressure.

2. Cylinder head according to claim 1, characterized in that the first end (40) of the bush (38) terminates approximately flush with the bottom surface (20).

3. Cylinder head according to claim 1, characterized in that the first end (40) of the bush (38) extends beyond the bottom surface (20) and into the combustion chamber (24).

4. Cylinder head according to one of the preceding claims, characterized in that the outer peripheral surface of the bush (38) as well as the injection bore (36 ; 66) are stepped.

5. Cylinder head according to claim 4, characterized in that the bush (38) consists of a first and a second section (44, 46), which lie between a first and a second end (40, 42) of the bush (38), the cross-sectional area of the second section (46) being somewhat greater than that of the first section (44), leading thus to a greater tolerance excess relative to a section of the injection bore (36 ; 66) and thus to an easier fixing of the bush (38) in the injection bore (36 ; 66).

6. Cylinder head according to claim 5, characterized in that the first section (44) extends from the said end (40) of the bush (38) over about 70 to 90 % of the total length of the bush (38).

7. Cylinder head according to one of the preceding claims, characterized in that, in an arrangement of only two openings (30, 32) the greatest length (L) of the said web region (34) is smaller than twice the diameter of the larger of the inlet and exhaust openings (30, 32).

8. Cylinder head according to one of claims 1 to 6, with two inlet ducts (26) and two exhaust channels (28), which open out into four inlet and exhaust openings (54, 56, 58, 60) arranged in a square within the bottom surface, characterized in that two overlapping web regions (62, 64) are formed between the outer periphery of each pair of diagonally opposed inlet and exhaust openings (54, 60 ; 56, 58), the greatest length (L') of each web section being smaller than three times the diameter of the largest diagonally arranged inlet or exhaust opening (54, 56, 58, 60), the injection bore (66) being arranged at least partially in the overlapping region of the two web regions (62, 64).

## Revendications

1. Culasse (16) pour moteur à combustion interne, comportant :

a) une surface de base (20), qui obture une extrémité d'un cylindre (14) ;

b) au moins une tubulure d'aspiration (26) et un canal d'échappement (28), qui se terminent par des lumières d'aspiration et d'échappement (30, 32 ; 54, 56, 58, 60) disposées l'une à côté de l'autre et ménagées dans la surface de base (20), ces lumières communiquant avec une chambre de combustion (24) formée entre la surface de base (20) et un piston (22) monté dans le cylindre (14) ;

c) un perçage d'injection (36 ; 66), qui est destiné à un injecteur (48, 50) et qui communique avec la chambre de combustion (24) ;

d) une zone, formant nervure (34 ; 62, 64) qui demeure entre les périphéries extérieures de deux lumières voisines (30 ; 32 ; 54, 60, 56, 58), et dans laquelle le perçage d'injection (36 ; 66) est au moins partiellement ménagé, ce perçage ayant au moins un diamètre inférieur au diamètre des lumières précitées (30, 32 ; 54, 60, 56, 58) ;

e) une fourrure (38), faisant élément porteur, qui est disposée dans au moins une partie du perçage d'injection (36 ; 66), laquelle culasse est caractérisée en ce que :

f) la fourrure (38) est engagée par emmanchement à force dans ladite partie du perçage d'injection (36 ; 66) pour réduire les pointes de charge et retarder le début de la formation de fissures par fatigue thermique dans ladite zone formant nervure (34 ; 62, 64) ;

g) la matière de la fourrure (38) a un coefficient de dilatation thermique supérieur à celui de la matière formant la culasse (16) ;

h) la matière de la fourrure (38) est plus rigide que la matière de la culasse (16), afin de s'opposer ainsi à la tendance de la culasse (16) à fléchir sous l'effet de la pression.

2. Culasse suivant la revendication 1, caractérisée en ce que la première extrémité (40) de la fourrure (38) se termine sensiblement à l'affleurement de la surface de base (20).

3. Culasse suivant la revendication 1, caractérisée en ce que la première extrémité (40) de la fourrure (38) s'étend au-delà de la surface de base (20) et jusque dans la chambre de combustion (24).

4. Culasse suivant l'une des revendications précédentes, caractérisée en ce que la surface périphérique extérieure de la fourrure (38) ainsi que le perçage d'injection (36 ; 66) sont en gradins.

5. Culasse suivant la revendication 4, caractérisée en ce que la fourrure (38) comprend une première et une seconde parties (44, 46) qui se trouvent entre une première et une seconde extrémités (40, 42) de la fourrure (38), la surface en section droite de la seconde partie (46) étant un peu plus grande que celle de la première partie (44), aboutissant ainsi à une plus grande surcote d'ajustage avec une partie du perçage d'injection (36 ; 66) et ainsi à une fixation plus facile de la fourrure (38) dans le perçage d'injection (36 ; 66).

6. Culasse suivant la revendication 5, caractérisée en ce que la première partie (44) s'étend depuis l'extrémité précitée (40) de la fourrure (38) sensiblement sur 70 à 90 % de la longueur totale de la fourrure (38).

7. Culasse suivant l'une des revendications précédentes, caractérisée en ce que, lorsqu'il est prévu seulement deux lumières (30, 32), la plus grande longueur (L) de la zone formant nervure précitée (34) est inférieure au double du diamètre de la plus grande des lumières d'aspiration ou d'échappement (30, 32).

8. Culasse suivant l'une des revendications 1 à 6, comportant deux tubulures d'aspiration (26) et deux canaux d'échappement (28), qui débouchent dans quatre lumières d'aspiration et d'échappement (54, 56, 58, 60) disposées selon un quadrilatère dans la surface de base (20), caractérisée en ce qu'il est formé, entre les périphéries extérieures respectives de deux lumières d'aspiration et d'échappement (54, 60 ; 56, 58) diagonalement opposées, deux zones formant nervure (62, 64) se chevauchant, dont la plus grande longueur (L') est respectivement inférieure au triple du diamètre de la plus grande des lumières d'aspiration ou d'échappement (54, 56, 58, 60) disposée en diagonale, le perçage d'injection (66) étant ménagé au moins en partie dans la zone de chevauchement des deux zones formant nervures (62, 64).

Fig. 2

Fig. 3

Fig. 1

Fig. 4

Fig. 5

Fig. 6